# EUROPÄISCHE PATENTSCHRIFT

(11) **EP 2 836 527 B1**
(45) Veröffentlichungstag und Bekanntmachung des Hinweises auf die Patenterteilung: **24.02.2016**
(21) Anmeldenummer: 13717004.9
(22) Anmeldetag: 09.04.2013
(51) Int. Cl.: C08F 290/04, C08F 290/06, C08G 18/67, C09J 151/00, C09J 175/14, C09J 175/16

(54) **RADIKALISCH HÄRTBARE ZUSAMMENSETZUNGEN GEEIGNET FÜR DAS VERKLEBEN VON WEICHMACHERHALTIGEM PVC**
CURABLE COMPOSITION SUITABLE FOR THE BONDING OF PLASTICIZED PVC
COMPOSITIONS RADICALEMENT DURCISSABLES ADAPTÉES AU COLLAGE DE PVC COMPRENANT DU PLASTIFIANT

(30) Priorität: 10.04.2012 EP 12163562
(43) Veröffentlichungstag der Anmeldung: 18.02.2015
(73) Patentinhaber: Sika Technology AG, 6340 Baar (CH)
(72) Erfinder: MEIER, Heinz, CH-8032 Zürich (CH); HAUFE, Markus, CH-8048 Zürich (CH); LUSSI, Josef, CH-3920 Zermatt (CH); JENDOUBI, Elyes, CH-8052 Zürich (CH); CARL, Wilfried, CH-8820 Wädenswil (CH)
(74) Vertreter: Sika Patent Attorneys
(86) Internationale Anmeldenummer: PCT/EP2013/057343
(87) Internationale Veröffentlichungsnummer: WO 2013/153046

(56) Entgegenhaltungen:
- EP-A1- 2 003 153
- EP-A1- 2 072 592

## Beschreibung

### Technisches Gebiet

Die Erfindung betrifft das Gebiet der elastischen Klebstoffe, Dichtstoffe und Beschichtungen auf der Basis von radikalisch polymerisierbaren Monomeren, geeignet für das Verkleben von weichmacherhaltigem PVC.

### Stand der Technik

Zusammensetzungen auf der Basis von radikalisch polymerisierbaren Monomeren, insbesondere (Meth)acrylatzusammensetzungen, werden seit längerem in der Klebe-, Dicht- und Beschichtungstechnik eingesetzt. Ebenfalls bekannt ist der Einsatz von (meth)acrylatfunktionalisierten Elastomeren zur Erhöhung der Flexibilität solcher Kleb- und Dichtstoffe sowie Beschichtungen.

Beispielsweise sind derartige Zusammensetzungen beschrieben in WO 2010/043707. Die beschriebenen Zusammensetzungen weisen jedoch bei der Verklebung, Abdichtung oder Beschichtung von weichmacherhaltigem PVC den Nachteil auf, dass sei im Falle von feuchtem weichmacherhaltigem PVC oder im Falle einer Wasserlagerung von verklebtem weichmacherhaltigem PVC eine geringe Haftung zeigen. Insbesondere für das Verkleben von Abdichtungsmembranen aus weichmacherhaltigem PVC sind solche Zusammensetzungen ungeeignet.

### Darstellung der Erfindung

Aufgabe der vorliegenden Erfindung ist es daher, elastische Zusammensetzungen auf der Basis von radikalisch polymerisierbaren Monomeren zur Verfügung zu stellen, welche auf feuchtem weichmacherhaltigem PVC oder im Falle einer Wasserlagerung von verklebtem weichmacherhaltigem PVC eine gute Haftung zeigen.

Überraschenderweise wurde nun gefunden, dass Zusammensetzungen, wie sie in Anspruch 1 erwähnt sind, diese Aufgabe lösen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist die Verwendung einer Zusammensetzung umfassend:
a) 20 - 90 Gew.-% Methylmethacrylat **MMA**, insbesondere 50 - 80 Gew.-% , bevorzugt 55 - 70 Gew.-%, bezogen auf das Gesamtgewicht der Zusammensetzung, sowie
b1) 1 - 40 Gew.-%, insbesondere 7.5 - 35 Gew.-% , bevorzugt 10 - 20 Gew.-%, bezogen auf das Gesamtgewicht der Zusammensetzung, mindestens eines Elastomers und/oder
b2) 1 - 20 Gew.-%, insbesondere 2 - 10 Gew.-%, bevorzugt 2 - 5 Gew.-%, bezogen auf das Gesamtgewicht der Zusammensetzung, mindestens eines Core-shell Polymers, sowie
c) mindestens einen Radikalbildner, insbesondere ein Peroxid, ein Hydroperoxid oder ein Perester, meist bevorzugt Dibenzoylperoxid,
   als Klebstoff, Dichtstoff oder als Beschichtung, insbesondere als Klebstoff, für das Verkleben oder Abdichten oder Beschichten, insbesondere das Verkleben, von Substraten enthaltend weichmacherhaltigen PVC, wobei der Anteil an Weichmacher 20 Gew.-% - 40 Gew.-%, insbesondere 25 Gew.-% - 35 Gew.-%, beträgt, bezogen auf das Gesamtgewicht des weichmacherhaltigen PVC.

Mit "Poly" beginnende Substanznamen wie beispielsweise Polyisocyanat, Polyurethan, Polyester oder Polyol bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Unter "Molekulargewicht" versteht man im vorliegenden Dokument stets das Zahlenmittel des Molekulargewichts Mₙ.

Die in PVC eingesetzten Weichmacher sind typischerweise Ester organischer Carbonsäuren, wie Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester oder weitere dem Fachmann bekannte weichmachende Zuschlagstoffe, wie z. B. in "Plasticisers, Alan S. Wilson, The Institute of Materials, 1995, dargelegt. Vorzugsweise handelt es sich um Ester organischer Carbonsäuren, insbesondere Phthalate.

Die Zusammensetzung umfasst 20 - 90 Gew.-% Methylmethacrylat **MMA**, insbesondere 50 - 80 Gew.-% , bevorzugt 55 - 70 Gew.-%, am meisten bevorzugt 55 - 65 Gew.-%, bezogen auf das Gesamtgewicht der Zusammensetzung. Erstaunlicherweise führt die Verwendung von anderen radikalisch polymerisierbaren Monomeren wie beispielsweise Methylacrylat, Tetrahydrofurfuryl(meth)acrylat, Benzyl(meth)acrylat, Isobornyl(meth)acrylat und Trimethylcyclohexyl(meth)acrylat im Gegensatz zu Methylmethacrylat nicht zu einer Haftung auf weichmacherhaltigem PVC, insbesondere bei feuchten Substraten aus weichmacherhaltigem PVC.

Die Zusammensetzung weist weiter:
b1) 1 - 40 Gew.-%, insbesondere 7.5 - 35 Gew.-% , bevorzugt 10 - 20 Gew.-%, bezogen auf das Gesamtgewicht der Zusammensetzung, mindestens eines Elastomers und/oder
b2) 1 - 20 Gew.-%, insbesondere 2 - 10 Gew.-%, bevorzugt 2 - 5 Gew.-%, bezogen auf das Gesamtgewicht der Zusammensetzung, mindestens eines Core-shell Polymers,
auf.

Unter dem Begriff "Elastomer" werden im vorliegenden Dokument Verbindungen verstanden, wie sie als Elastomere aufgeführt sind in CD Römpp Chemie Lexikon, 9. Auflage, Version 1.0, Georg Thieme Verlag, Stuttgart 1995.

Vorzugsweise handelt es sich um Elastomere, welche radikalisch polymerisierbare Gruppen, insbesondere Endgruppen, aufweisen.

Vorzugsweise handelt es sich bei den Elastomeren um Polymere, insbesondere Polyrutethan-Polymere, oder Blockcopolymere, insbesondere der Monomere Styrol, Butadien, Isopren, Chloropren, Acrylnitril und Methylmethacrylat, sowie chlorsulfoniertes Polyethylen.

Geeignete Copolymere sind beispielsweise auch kommerziell erhältlich von der Firma Kraton Polymers, USA. Geeignete chlorsulfonierte Polyethylene sind beispielsweise kommerziell erhältlich unter dem Handelsnamen Hypalon® von der Firma DuPont Performance Elastomers, LLC, USA oder unter dem Handelsnamen Toso-CSM® von der Firma Tosoh Corporation, Japan.

Besonders geeignete Copolymere sind Flüssigkautschuke, wie sie unter den Handelsnahmen Hypro® CTBN, ETBN oder VTBN kommerziell erhältlich sind von der Firma Emerald Performance Materials, LLC, USA, sowie epoxidharzmodifizierte Flüssigkautschuke des Typs Hypro® CTBN. Insbesondere bevorzugt sind vinylterminierte Acrylonitril/Butadien-Copolymere.

Weiter besonders geeignet sind Polyurethan(meth)acrylate, insbesondere ein Polyurethan(meth)acrylat **PUMA**, welches erhältlich ist aus der Umsetzung eines Polyols **P** mit einem Diisocyanat und eines hydroxyfunktionalisierten-, aminfunktionalisierten- oder amidfunktionalisierten ethylenisch ungesättigten Monomers

Bei dem hydroxyfunktionalisierten-, aminfunktionalisierten- oder amidfunktionalisierten ethylenisch ungesättigten Monomer handelt es sich vorzugsweise um (Meth)acrylamid, (Meth)acrylsäure oder(Meth)acrylsäureester.

Bei dem Polyol **P** handelt es sich vorzugsweise um ein Polyesterpolyol, Polyetherpolyol oder ein Polycarboxylatpolyol. Insbesondere geeignet sind Polyole **P** mit einem Molekulargewicht von 400 bis 12'000 g/mol, insbesondere 1'000 bis 6'000 g/mol, bevorzugt 2'000 bis 5'500 g/mol. Insbesondere bevorzugt handelt es sich bei dem Polyol **P** um ein Polyesterpolyol oder ein Polyetherpolyol.

Handelt es sich bei dem Polyol **P** um ein Polyesterpolyol, so handelt es sich bevorzugt um ein aliphatisches Polyesterpolyol. Weiterhin bevorzugt handelt es sich um ein Polyesterdiol.

Als Polyole **P** eignen sich weiterhin auch Polyetherpolyesterpolyole, insbesondere Copolymere von vorhergehend genannten Polyesterpolyolen und Polyetherpolyolen.

Handelt es sich bei dem Polyol **P** um ein Polyesterpolyol, so handelt es sich bevorzugt um amorphe Polyesterpolyole, insbesondere um solche, welche bei Raumtemperatur (23 °C) flüssig sind. Weiterhin bevorzugt sind Polyesterpolyole, welche eine tiefe Glasübergangstemperatur (T_{g}) aufweisen, insbesondere eine Glasübergangstemperatur im Bereich von -80 °C bis 0 °C, insbesondere von -70 °C bis -50 °C.

Handelt es sich bei dem Polyol **P** um ein Polyetherpolyol, so handelt es sich bevorzugt um Polyoxyethylenpolyole, Polyoxypropylenpolyole und Polyoxybutylenpolyole, insbesondere Polyoxyethylendiole, Polyoxypropylendiole, Polyoxybutylendiole, Polyoxyethylentriole und Polyoxypropylentriole.

Als Diisocyanate eignen sich grundsätzlich alle Diisocyanate.

Bevorzugt sind aliphatische und cycloaliphatische Diisocyanate. Meist bevorzugt ist 1-Isocyanato-3,3,5-trimethyl-5-isocyanatomethyl-cyclohexan (IPDI).

Ein Core-shell Polymer besteht aus einem elastischen Kernpolymer (Core) und einem starren Schalen-Polymer (Shell). Besonders geeignete Core-Shell Polymere bestehen aus einer starren Schale eines starren thermoplastischen Polymers, welche auf einem Kern aus vernetztem elastischem Acrylat- oder Butadien-Polymer aufgepfropft ist.

Besonders geeignete Core-Shell Polymere sind diejenigen, welche im Methylmethacrylat **MMA** aufquellen, sich aber darin nicht lösen.

Weitere besonders geeignete Core-Shell Polymere sind Acrylat-basierte Core-shell Polymere, welche beispielsweise kommerziell unter dem Handelsnamen Durastrength^{®} von Arkema Inc., USA, erhältlich sind.

Bevorzugte Core-Shell Polymere sind auch so genannte MBS (Methylmethacrylat/Butadien/Styrol) Polymere, welche beispielsweise kommerziell unter dem Handelsnamen Clearstrength^{®} von Arkema Inc., USA, oder Paraloid^{®} von Rohm and Haas, USA, erhältlich sind.

Die Core-Shell Polymere werden bevorzugt in einer Menge von 2 - 10 Gew.-%, insbesondere bevorzugt 2 - 5 Gew.-%, bezogen auf die gesamte Zusammensetzung, eingesetzt.

Am meisten bevorzugt umfasst die Zusammensetzung b1) ein Elastomer, insbesondere um ein Polyurethan(meth)acrylat und/oder ein vinylterminiertes Acrylonitril/Butadien-Copolymer.

Es kann weiter besonders bevorzugt sein, dass die Zusammensetzung
b1) ein Elastomer, insbesondere um ein Polyurethan(meth)acrylat und/oder ein vinylterminiertes Acrylonitril/Butadien-Copolymer, sowie
b2) ein Core-Shell Polymer, insbesondere ein Acrylat-basiertes Core-shell Polymer oder ein MBS Polymer,
aufweist.

Weist die Zusammensetzung b1) sowie b2) auf, so kann es weiter vorteilhaft sein, dass die Gesamtmenge an b1) und b2) zusammen 10 - 35 Gew.-%, insbesondere 12 - 35 Gew.-%, bezogen auf die gesamte Zusammensetzung, beträgt.

Die Zusammensetzung weist weiter c) mindestens einen Radikalbildner, insbesondere ein Peroxid, ein Hydroperoxid oder ein Perester, meist bevorzugt Dibenzoylperoxid, auf

Typischerweise weist die Zusammensetzung weiterhin mindestens einen Katalysator für die Radikalbildung auf. Dieser Katalysator ist insbesondere ein tertiäres Amin, insbesondere ein aromatisches tertiäres Amin, ein Übergangsmetallsalz oder ein Übergangsmetallkomplex. Beispielsweise sind solche geeignete tertäre Amine aromatische Amine, insbesondere ausgewählt aus der Gruppe bestehend aus N,N-Dimethylanilin, N,N-Diethylanilin, N,N-Bis(hydroxyalkyl)anilin wie N,N-Bis(2-hydroxyethyl)anilin, N,N-Alkylhydroxy-alkylanilin wie N-Ethyl-N-hydroxyethylanilin, N,N-Dimethyl-p-toluidin, N,N-Diethyl-p-toluidin, N-Methyl-N-hydroxyethyl-p-toluidin, N,N-Bis(2-hydroxyethyl)-p-toluidin sowie alkoxylierte N,N-Bis(hydroxyethyl)-p-toluidine, N-ethoxyliertes p-Toluidin, N,N-Bis(2-hydroxyethyl)-xylidin, N-Alkylmorpholin und Mischungen davon. Übergangmetallsalze und Übergangsmetallkomplexe sind beispielsweise Salze und Komplexe von Cobalt, Nickel, Kupfer, Mangan oder Vanadium.

Weitere bevorzugte Katalysatoren für die Radikalbildung sind beispielsweise beschrieben in den Abschnitten [0041] - [0054] von US 2002/0007027 A1, dessen gesamte Offenbarung hiermit durch Bezugnahme eingeschlossen wird.

Der Katalysator für die Radikalbildung wird üblicherweise in einer Menge von 0.01 bis 3 Gew.-%, insbesondere von 0.1 bis 2 Gew.-%, bezogen auf die Zusammensetzung, eingesetzt.

Als Radikalbildner können beispielsweise auch Moleküle eingesetzt werden, welche unter Einfluss von Wärme oder von elektromagnetischer Strahlung Radikale bilden, die dann zur Polymerisation der Zusammensetzung führen. Typischerweise sind dies thermisch aktivierbare Radikalbildner und Photoinitiatoren.

Als thermisch aktivierbare Radikalbildner eignen sich solche, welche bei Raumtemperatur noch genügend stabil sind, bei leicht erhöhter Temperatur aber bereits Radikale bilden, beispielsweise Azo-Bis-Isobutyronitril (AIBN).

Als Photoinitiator werden Radikalbildner bezeichnet, welche unter dem Einfluss von elektromagnetischer Strahlung Radikale bilden. Insbesondere geeignet ist ein Photoinitiator, welcher bei einer Bestrahlung mit einer elektromagnetischen Strahlung der Wellenlänge von 230 nm bis 400 nm Radikale bildet und bei Raumtemperatur flüssig ist. Beispielsweise sind derartige Photoinitiatoren ausgewählt aus der Gruppe bestehend aus α-Hydroxyketonen, Phenylglyoxylaten, Monoacylphosphinen, Diacylphosphinen, Phosphinoxiden und Mischungen davon.

Weiterhin kann die Zusammensetzung neben Methylmethacrylat **MMA** zusätzliche radikalisch polymerisierbare Monomere **M** aufweisen, welche insbesondere ausgewählt sind aus der Gruppe bestehend aus Tetrahydrofurfuryl(meth)acrylat, Tetrahydrofuryl(meth)acrylat, Cyclohexyl-(meth)acrylat, Isobornyl(meth)acrylat und Trimethylcyclohexyl(meth)acrylat.

Der Anteil dieser radikalisch polymerisierbaren Monomere **M** beträgt vorzugsweise 0 bis 10 Gew.-%, insbesondere 0 bis 5 Gew.-%, bezogen auf die gesamte Zusammensetzung.

Es kann vorteilhaft sein, wenn die Zusammensetzung neben Methylmethacrylat **MMA** keine zusätzlichen radikalisch polymerisierbaren Monomere **M** aufweist.

Weiterhin kann die Zusammensetzung zusätzlich mindestens einen Füllstoff enthalten. Insbesondere geeignet sind dabei natürliche, gemahlene oder gefällte Calciumcarbonate (Kreiden), welche gegebenenfalls mit Fettsäuren, insbesondere Stearaten, beschichtet sind, Montmorillonite, Bentonite, Bariumsulfat (BaSO₄, auch Baryt oder Schwerspat genannt), calcinierte Kaoline, Quarzmehl, Aluminiumoxide, Aluminiumhydroxide, Kieselsäuren, insbesondere pyrogene Kieselsäuren, modifizierte Rizinusölderivate und Polymerpulver oder Polymerfasern. Bevorzugt sind Calciumcarbonate, meist bevorzugt sind beschichtete Calciumcarbonate.

Der Füllstoff wird üblicherweise in einer Menge von 0.01 bis 50 Gew.-%, insbesondere von 10 bis 30 Gew.-%, bevorzugt 15 bis 20 Gew.-%, bezogen auf die gesamte Zusammensetzung, eingesetzt.

Die Zusammensetzung kann weiterhin zusätzlich mindestens ein Epoxidharz enthalten, welches durchschnittlich mehr als eine Epoxidgruppe pro Molekül aufweist. Vorzugsweise handelt sich dabei um Diglycidylether von Bisphenol A, von Bisphenol F sowie von Bisphenol A/F. Die Bezeichnung "A/F" verweist hierbei auf eine Mischung von Aceton mit Formaldehyd, welche als Edukt bei dessen Herstellung verwendet wird. Bevorzugt stellt das Epoxidharz ein Epoxid-Flüssigharz dar. Weiterhin geeignet stellt das Epoxidharz eine Mischung von Epoxid-Flüssigharz mit Epoxid-Festharz dar.

Geeignete Epoxid-Flüssigharze sind beispielsweise unter den Handelsnamen Araldite^{®} GY 250, Araldite^{®} PY 304, Araldite^{®} GY 282 von der Firma Huntsman International LLC, USA, oder D.E.R.^{®} 331 oder D.E.R.^{®} 330 von der Firma The Dow Chemical Company, USA, oder unter dem Handelsnamen Epikote^{®} 828 oder Epikote^{®} 862 von der Firma Hexion Specialty Chemicals Inc, USA, kommerziell erhältlich.

Die Zusammensetzung kann gegebenenfalls zusätzlich noch weitere Bestandteile enthalten. Derartige zusätzliche Bestandteile sind insbesondere, Farbstoffe, Pigmente, Inhibitoren, UV- und Hitzestabilisatoren, Antistatika, Flammschutzmittel, Biozide, Weichmacher, Wachse, Verlaufsmittel, Haftvermittler, Thixotropiermittel, Abstandhalter und weitere dem Fachmann bekannte gängige Rohstoffe und Additive.

Vorzugsweise handelt es sich bei der Zusammensetzung um eine zweikomponentige Zusammensetzung, wobei zwei Komponenten **K1** und **K2** bis zur Applikation getrennt voneinander aufbewahrt werden. Typischerweise beinhaltet die erste Komponente **K1** insbesondere jene Inhaltsstoffe der beschriebenen Zusammensetzung, welche radikalisch polymerisierbare Gruppen aufweisen. Die zweite Komponente **K2** beinhaltet insbesondere die Radikalbildner. Weiterhin können in einer zweikomponentigen Zusammensetzung auch andere Bestandteile, insbesondere solche, welche durch Reaktion untereinander die Lagerstabilität der Zusammensetzung beeinträchtigen würden, getrennt aufbewahrt werden.

Bevorzugt weisen in beschriebenen zweikomponentigen Zusammensetzungen die Komponente **K1** das
a)Methylmethacrylat **MMA,**
b1)das mindestens eine Elastomer und/oder b2) mindestens eine Core-shell Polymer, sowie
   den mindestens einen Radikalbildner auf
und weitere gegebenenfalls vorhandene Bestandteile wie Katalysatoren für die Radikalbildung und Füllstoffe und die Komponente **K2** den Radikalstarter sowie gegebenenfalls vorhandene Füllstoffe und Epoxidharze auf. Das Volumenverhältnis beim Mischen von **K1** zu **K2** liegt insbesondere im Bereich von 1:1 bis 10:1.

In gewissen Fällen kann es vorteilhaft sein, die beiden Komponenten **K1** und **K2** unterschiedlich einzufärben. Dadurch lässt sich bei der Mischung der Komponenten die Mischgüte überprüfen und Mischfehler lassen sich frühzeitig erkennen. Ebenfalls lässt sich durch diese Massnahme qualitativ überprüfen, ob das vorgesehene Mischverhältnis eingehalten wurde.

Eine derartige zweikomponentige Zusammensetzung wird typischerweise in einer Verpackung aufbewahrt, welche zwei von einander getrennte Kammern aufweist. Die Komponente **K1** ist hierbei in der einen Kammer und die Komponente **K2** ist in der anderen Kammer der Verpackung vorhanden. Geeignete Verpackungen sind beispielsweise Doppelkartuschen, wie Zwillings- oder Koaxialkartuschen, oder Mehrkammerschlauchbeutel mit Adapter. Bevorzugt erfolgt das Mischen der beiden Komponenten **K1** und **K2** mit Hilfe eines Statikmischers, welcher auf die Verpackung mit zwei Kammern aufgesetzt werden kann.

Solche geeigneten Verpackungen sind beispielsweise beschrieben in US 2006/0155045 A1, WO 2007/096355 A1 und in US 2003/0051610 A1, deren gesamte Offenbarung hiermit durch Bezugnahme eingeschlossen wird.

In einer grosstechnischen Anlage werden die beiden Komponenten **K1** und **K2** typischerweise in Fässern oder Hobbocks voneinander getrennt aufbewahrt und bei der Applikation, beispielsweise mittels Zahnradpumpen, ausgepresst und vermischt werden. Die Zusammensetzung kann dabei von Hand oder in einem automatisierten Prozess mittels Roboter auf ein Substrat aufgetragen werden.

Die Aushärtung der erfindungsgemässen Zusammensetzung erfolgt durch eine radikalische Polymerisationsreaktion des Methylmethacrylat **MMA** und gegebenenfalls weiterer radikalisch polymerisierbarer Bestandteile in der Zusammensetzung. Der Ablauf, insbesondere die Geschwindigkeit, der zur Aushärtung der Zusammensetzung führenden Reaktion, kann durch die Wahl der eingesetzten Bestandteile eingestellt werden. Typischerweise verläuft die Aushärtung der Zusammensetzung in der Art, dass die Zusammensetzung trotz einer langen Offenzeit bereits in einem frühen Stadium eine hohe Anfangsfestigkeit erhält, typischerweise beträgt die Offenzeit 1 - 90 min.

Die Erfindung betrifft die Verwendung der Zusammensetzung, wie sie vorhergehend beschrieben ist, als Klebstoff, Dichtstoff oder als Beschichtung für das Verkleben oder Abdichten oder Beschichten von Substraten enthaltend weichmacherhaltiges PVC, wobei der Anteil an Weichmacher 20 Gew.-% - 40 Gew.-% beträgt, bezogen auf das Gesamtgewicht des weichmacherhaltigen PVC.

Das Substrat besteht vorzugsweise zu mehr als 50 Gew-% aus weichmacherhaltigem PVC, bezogen auf das Gesamtgewicht des Substrats. Vorzugswiese besteht das Substrat zu mehr als 70 Gew.-%, insbesondere zu mehr als 90 Gew-% aus weichmacherhaltigem PVC, bezogen auf das Gesamtgewicht des Substrats.

Weiter kann das Substrat Materialien enthalten, welche als Verarbeitungshilfsmittel für PVC geeignet sind. Typischerweise sind solche Materialien ausgewählt aus der Gruppe bestehend aus Polyethylen mit hoher Dichte (HDPE), Polyethylen mit mittlerer Dichte (MDPE), Polyethylen mit tiefer Dichte (LDPE), Polyethylen (PE), Polypropylen (PP), Polyethylenterephthalat (PET), Polystyrol (PS), Ethylen-Vinylacetat (EVA), chlorsulfoniertes Polyethylen, thermoplastische Polyolefine (TPO), Ethylen-Propylen-DienKautschuk (EPDM) und Polyisobutylen (PIB) sowie Mischungen davon. Vorzugswiese besteht das Substrat zu weniger als 5 Gew.-%, bevorzugt zu weniger als 1 Gew.-%, insbesondere bevorzugt zu weniger als 0.5 Gew.-%, aus vorgenannten Materialien, welche als Verarbeitungshilfsmittel für PVC geeignet sind, bezogen auf das Gesamtgewicht des Substrats.

Bei dem Substrat handelt es sich vorzugsweise um eine Abdichtungsmembran, insbesondere zur Abdichtung von Untergründen.

Es ist weiter von Vorteil, wenn es sich bei der Abdichtungsmembran um eine flexible Abdichtungsmembran, insbesondere um eine flexible Bahn, handelt. Diese kann einfach gerollt und somit einfach gelagert, beziehungsweise transportiert, werden. So gelangt die Abdichtungsmembran einfach auf die Baustelle und kann dort abgerollt und auf die benötigten Dimensionen abgeschnitten werden.

Die Abdichtungsmembran wird typischerweise als vorgefertigte Bahn verwendet. In diesem Fall wird die Abdichtungsmembran vorzugsweise durch einen industriellen Prozess in einem Folienwerk gefertigt und gelangt auf der Baustelle vorzugsweise in Form von einer Abdichtungsmembran ab einer Rolle zum Einsatz. Die Abdichtungsmembran kann jedoch auch in Form von Streifen mit einer Breite von typischerweise 1 - 20 cm zum Einsatz kommen, beispielsweise um Verbindungsstellen zwischen zwei Dachbahnen abzudichten. Weiter kann die Abdichtungsmembran auch in Form von flächigen Körpern zur Reparatur von schadhaften Stellen in Abdichtungen, beispielsweise Dachbahnen, vorliegen und verwendet werden.

Eine bevorzugte Verwendung der Abdichtungsmembran ist daher eine Verwendung zum Abdichten gegen Feuchtigkeit von Bauten im Hoch- und Tiefbau, insbesondere von Dächern, Böden, Wasserführungen und Tunnels.

Um als Abdichtungsmembran möglichst geeignet zu sein, sollte sie möglichst wasserdicht sein und sich auch unter längerem Einfluss von Wasser, beziehungsweise Feuchtigkeit, nicht zersetzen oder mechanisch beschädigt werden. Als Abdichtungsmembran sind insbesondere derartige Folien geeignet, wie sie für Abdichtungszwecke im Hoch- und Tiefbau bereits im Stand der Technik eingesetzt werden. Die Abdichtungsmembran sollte vorteilhaft ein zumindest geringes Ausmass an Elastizität aufweisen, um beispielsweise durch Temperaturen verursachte Ausdehnungsunterschiede zwischen Abdichtungsmembran und Untergrund oder durch Risse im Untergrund verursachte Spannungen überbrücken zu können, ohne dass die Abdichtungsmembran beschädigt wird oder reisst und die Dichtfunktion der Abdichtungsmembran beeinträchtigen würde.

Vorzugsweise handelt es sich bei den Substraten um feuchte Substrate und/oder häufig Feuchtigkeit exponierte Substraten. Vorzugsweise sind die Substrate bei der Verklebung mit der Zusammensetzung feucht und/oder im verklebten Zustand häufig, insbesondere mehr als 10 % der Zeit, Feuchtigkeit in Form von stehendem/fliessendem Wasser, ausgesetzt.

Die erfindungsgemässe Verwendung geschieht insbesondere in einem Verfahren des Verklebens zweier Substrate **S1** und **S2** umfassend die Schritte
i) Applizieren einer Zusammensetzung gemäss vorhergehender Beschreibung auf ein Substrat **S1**;
ii) Kontaktieren der applizierten Zusammensetzung mit einem zweiten Substrat **S2** innerhalb der Offenzeit;
oder
i') Applizieren einer Zusammensetzung gemäss vorhergehender Beschreibung auf ein Substrat **S1**;
ii') Applizieren einer Zusammensetzung gemäss vorhergehender Beschreibung auf ein Substrat **S2**;
iii') Fügen der beiden mit Zusammensetzung versehenen Substrate **S1** und **S2** innerhalb der Offenzeit;
   oder
i") Applizieren einer Zusammensetzung gemäss vorhergehender Beschreibung zwischen zwei Substrate **S1** und **S2**;

Dabei besteht das zweite Substrat **S2** aus dem gleichen oder einem unterschiedlichen Material wie das Substrat **S1**. Im Fall einer zweikomponentigen Zusammensetzung erfolgt vor dem Schritt i), bzw. i'), ii') und i"), das zumindest partielle Mischen der zwei Komponenten.

Ebenfalls möglich ist ein Verfahren der Verklebung zweier Substrate **S1** und **S2** umfassend die Schritte
i'") Applizieren einer Komponente **K1** gemäss vorhergehender Beschreibung auf ein Substrat **S1**;
ii"') Applizieren einer Komponente **K2** gemäss vorhergehender Beschreibung auf ein Substrat **S2**;
iii'") Fügen der beiden mit je einer Komponente **K1** bzw. **K2** versehenen Substrate **S1** und **S2**.

Bei einem derartigen Verfahren mischen sich die beiden Komponenten **K1** und **K2** beim Fügen der Substrate. Dieses Verfahren eignet sich insbesondere bei Verklebungen über sehr dünne Klebstoffschichten.

Weiter kann die erfindungsgemässe Zusammensetzung auch verwendet werden in einem Verfahren des Abdichtens oder des Beschichtens eines Substrates **S1** umfassend die Schritte
i"") Applizieren einer Zusammensetzung gemäss vorhergehender Beschreibung auf ein Substrat **S1**;
ii"") Aushärtung der Zusammensetzung.

Im Fall einer zweikomponentigen Zusammensetzung erfolgt vor dem Schritt i""), das zumindest partielle Mischen der zwei Komponenten.

Bei dem Substrat **S1** handelt es sich um ein Substrat enthaltend weichmacherhaltiges PVC, wobei der Anteil an Weichmacher 20 Gew.-% - 40 Gew.-%, insbesondere 25 Gew.-% - 35 Gew.-%, beträgt, bezogen auf das Gesamtgewicht des weichmacherhaltigen PVC, wie sie vorgehend beschrieben wurden.

Vorzugsweise handelt es sich bei dem Substrat **S1** um eine Abdichtungsmembran, insbesondere zur Abdichtung von Untergründen.

Bei dem Substrat **S2** handelt es sich vorzugsweise:
- um eine Abdichtungsmembran enthaltend weichmacherhaltiges PVC, wobei der Anteil an Weichmacher 20 Gew.-% - 40 Gew.-%, insbesondere 25 Gew.-% - 35 Gew.-%, beträgt, insbesondere zur Abdichtung von Untergründen, oder
- um einen Formkörper aus Kunststoff, Baumaterialien, wie Beton oder Gips, oder auch Substrate wie Glas, Holz und Metalle, insbesondere einen Formkörper enthaltend weichmacherhaltiges PVC, wobei der Anteil an Weichmacher 20 Gew.-% - 40 Gew.-%, insbesondere 25 Gew.-% - 35 Gew.-%, beträgt. Besonders als Formkörper geeignet sind beispielsweise Formkörper für Solarsysteme, also Photovoltaik oder Solarthermie, wie beispielsweise Solarelemente, Halterungen, Kabelführungen, Kabelkanäle, etc.

Die Verwendung der Zusammensetzung für solche Substrate S2 ist insbesondere aufgrund der Einfachheit und Schnelligkeit der Befestigung durch Verkleben, der geringen zusätzlichen Traglasten durch den Klebstoff, der kurzen Aushärtezeit des Klebstoffs, auch bei tieferen Temperaturen, und der ausgezeichneten Witterungsbeständigkeit des ausgehärteten Klebstoffs bevorzugt.

In einem weiteren Aspekt umfasst die vorliegende Erfindung eine Zusammensetzung zum Verkleben, Abdichten oder Beschichten, insbesondere zum Verkleben, von weichmacherhaltigem PVC, wobei der Anteil an Weichmacher 20 Gew.-% - 40 Gew.-%, insbesondere 25 Gew.-% - 35 Gew.-%, beträgt, bezogen auf das Gesamtgewicht des weichmacherhaltigen PVC, umfassend:
a') 55 - 65 Gew.-% Methylmethacrylat **MMA** bezogen auf das Gesamtgewicht der Zusammensetzung, sowie
b1') 10 - 20 Gew.-%, bezogen auf das Gesamtgewicht der Zusammensetzung, mindestens eines Elastomers und/oder
b2') 2 - 10 Gew.-%, bevorzugt 2 - 5 Gew.-%, bezogen auf das Gesamtgewicht der Zusammensetzung, mindestens ein Core-shell Polymer, sowie
c') mindestens einen Radikalbildner, insbesondere ein Peroxid, ein Hydroperoxid oder ein Perester, meist bevorzugt Dibenzoylperoxid,
wobei es sich bei dem Elastomer um ein Polyurethan(meth)acrylat und/oder ein vinylterminiertes Acrylonitril/Butadien-Copolymer und bei dem Core-shell Polymer um ein Acrylat-basiertes Core-shell Polymer oder ein MBS Polymer handelt.

Weiterhin umfasst die vorliegende Erfindung eine ausgehärtete Zusammensetzung, welche aus einer vorhergehend beschriebenen Zusammensetzung zum Verkleben, Abdichten oder Beschichten durch einen Härtungsprozess erhältlich ist.

Ebenfalls umfasst die Erfindung Artikel, welche mit einer vorhergehend beschriebenen Zusammensetzung verklebt, abgedichtet oder beschichtet wurden. Bei diesen Artikeln handelt es sich vorzugsweise um ein Bauwerk, insbesondere ein Bauwerk des Hoch- oder Tiefbaus,

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Herstellung eines Polyurethanmethacrylats PUMA auf Basis eines Polyethers

Es wurden 800 g Polyetherdiol (berechnetes Mₙ = 8'000 g/mol; OH-Zahl 13.9 mg KOH/g; Wassergehalt 0.018 Gew.-%) und 45.8 g 1-Isocyanato-3,3,5-trimethyl-5-isocyanatomethyl-cyclohexan (IPDI; Desmodur^{®} I, Bayer MaterialScience AG, Deutschland) in Anwesenheit von Dibutylzinndilaurat bei 90 °C zu einem Isocyanatgruppen terminierten Polyurethanpolymer mit einem titrimetrisch bestimmten Gehalt an freien Isocyanatgruppen von 1 Gew.-% umgesetzt. Anschliessend wurden 29.6 g Hydroxyethylmethacrylat (HEMA), unter dem Handelsnamen Rocryl^{®} 400 kommerziell erhältlich von der Firma Rohm and Haas, USA, zugegeben, welches mit den freien Isocyanatgruppen zum Polyurethanmethacrylat ***PUMA*** reagiert. Erhalten wird eine farblose Flüssigkeit mit einem NCO-Gehalt von ≤ 0.03 Gew.-%.

Das Polyurethanmethacrylat ***PUMA"*** wurde analog zu ***PUMA'*** mit einem Polyetherdiol mit einem Mₙ von 10'000 - 15'000 g/mol (Bayer MaterialScience AG ) und einem Polyetherdiol mit einem Mₙ von 1'000 g/mol (BASF), IPDI und HEMA hergestellt.

### Herstellung der Zusammensetzungen

Es wurden die folgenden Zusammensetzungen hergestellt:
Als Komponente **K1** wurden die in den Tabellen 1 und 2 aufgeführten Bestandteile in den angegebenen Gewichtsanteilen in einem Dissolver bei einer Temperatur von maximal 80 °C miteinander vermischt und eingerührt, bis eine makroskopisch homogene Paste erhalten wurde.

Als Komponente **K2** wurde SikaFast-5200B (Sika AG, Schweiz), enthaltend Dibenzoylperoxid, verwendet.

Die hergestellten Komponenten **K1** und **K2** wurden in die getrennten Kammern von Doppelkartuschen eingefüllt und bei der Applikation in einem Gewichtsverhältnis von 10:1 mittels Statikmischer vermischt.

### Beschreibung der Prüfmethoden

Die **Schälkraft (T-Peel Messung)** wurde bestimmt indem Probenkörper aus PVC enthaltend 35 Gew.-% Phthalate als Weichmacher mit einer Dicke von 1.5 mm, einer Breite von 5 cm und einer Länge von 14 cm verwendet wurden.

Zur Messung der Schälkraft bei trockenen Probenkörpern wurden die Probenkörper vor dem Applizieren der Klebstoffzusammensetzung mit Isopropanol abgerieben und für 10 min getrocknet.

Zur Messung der Schälkraft bei feuchten Probenkörpern wurden die Probenkörper vor dem Applizieren der Klebstoffzusammensetzung für 12 Stunden in Wasser gelagert und danach mit einem nassen Lappen die von Auge sichtbare Nässe abgewischt.

Danach wurden zwei Probenkörper an ihrem oberen Ende entlang der gesamten Breite von 5 cm mit einer 1 mm dicken Klebstoffschicht verklebt.

Anschliessend wurden die so verklebten Proben zwischen zwei Flächen angeordnet und mit einem Gewicht von 10 kg/0.25 m² beschwert und für 3 Tage bei 23°C und 50 % Luftfeuchtigkeit gelagert.

Danach wurden die Proben weitere 4 Tage ohne Beschwerung bei 23°C und 50 % Luftfeuchtigkeit gelagert.

Danach wurden die Proben einem 180°T-peel-Test nach DIN 53281 bei 23°C und 50% relativer Luftfeuchtigkeit unterzogen und einer Zuggeschwindigkeit von 100 mm/min.

**Tabelle 1 Zusammensetzungen 1 -4 und die Referenzbeispiele Ref1- Ref4 in Gewichtsanteilen sowie die Haftungsresultate;**

| | ***1*** | ***Ref.1*** | ***Ref.2*** | ***Ref.3*** | ***Ref.4*** | ***2*** | ***3*** | ***4*** |
|---|---|---|---|---|---|---|---|---|
| **K1** | | | | | | | | |
| **Monomer** | | | | | | | | |
| MMA | 60 | | | | | 60 | 60 | 60 |
| Tetrahydrofurfuryl methacrylat | | 60 | | | | | | |
| Trimethylcyclohexyl methacrylat | | | 60 | | | | | |
| Benzyl methacrylat | | | | 60 | | | | |
| Isobornylmethacrylat | | | | | 60 | | | |
| **Elastomer** | | | | | | | | |
| VTBN | | | | | | | | 20 |
| ***PUMA*'** | 15 | 15 | 15 | 15 | 15 | 20 | | |
| ***PUMA"*** | | | | | | | 20 | |
| **Core-Shell** ^{b} | 2 | 2 | 2 | 2 | 2 | 2 | 2 | 2 |
| Gefällte Kreide | 15 | 15 | 15 | 15 | 15 | 12 | 12 | 12 |
| Pyrog. Kieselsäure | 5 | 5 | 5 | 5 | 5 | 5 | 5 | 5 |
| Quarzmehl | 2 | 2 | 2 | 2 | 2 | | | |
| Katalysator ^{a} | 1 | 1 | 1 | 1 | 1 | 1 | 1 | 1 |
| **Total** | 100 | 100 | 100 | 100 | 100 | 100 | 100 | 100 |

| **K2** | | | | | | | | |
|---|---|---|---|---|---|---|---|---|
| SikaFast-5200B | 15 | 15 | 15 | 15 | 15 | 15 | 15 | 15 |
| Haftung [N/50 mm] trocken | 350 | k.A. | k.A. | k.A. | k.A. | 280 | 225 | 300 |
| Haftung [N/50 mm] feucht | 300 | k.A. | k.A. | k.A. | k.A. | 315 | 250 | 285 |

| | | | | | | | | |
|---|---|---|---|---|---|---|---|---|
| ^{a} Katalysator für Radikalbildung (tertiäres Amin auf Toluidinbasis); ^{b} Core-shell Polymer mit einem Kern aus Polybutyl-Acrylat und einer Hülle aus Methacrylat k.A. = keine Adhäsion | | | | | | | | |

**Tabelle 2 Zusammensetzungen 5 - 13 und das Referenzbeispiel Ref5 in Gewichtsanteilen sowie die Haftungsresultate;**

| | ***5*** | ***6*** | ***7*** | ***8*** | ***Ref.5*** | ***9*** | ***10*** | ***11*** | ***12*** | ***13*** |
|---|---|---|---|---|---|---|---|---|---|---|
| **K1** | | | | | | | | | | |
| **Monomer** | | | | | | | | | | |
| MMA | 30 | 50 | 60 | 70 | 60 | 60 | 60 | 60 | 60 | 60 |
| **Elastomer** | | | | | | | | | | |
| ***PUMA'*** | 15 | 15 | 15 | 15 | | 5 | 10 | 20 | 25 | 30 |
| **Core-Shell** ^{b} | 5 | 5 | 5 | 5 | | | | | | |
| Gefällte Kreide | 15 | 15 | 15 | 7 | 15 | 15 | 15 | 14 | 8 | 3 |
| Pyrog. Kieselsäure | 2 | 2 | 2 | 2 | 5 | 5 | 5 | 5 | 6 | 6 |
| Quarzmehl | 32 | 12 | 2 | | 19 | 14 | 9 | | | |
| Katalysator ^{a} | 1 | 1 | 1 | 1 | 1 | 1 | 1 | 1 | 1 | 1 |
| **Total** | 100 | 100 | 100 | 100 | 100 | 100 | 100 | 100 | 100 | 100 |

| **K2** | | | | | | | | | | |
|---|---|---|---|---|---|---|---|---|---|---|
| SikaFast-5200B | 15 | 15 | 15 | 15 | 15 | 15 | 15 | 15 | 15 | 15 |
| Haftung[N/50 mm] trocken | 50 | 80 | 350 | 400 | k.A. | 50 | 275 | 180 | 115 | 90 |
| Haftung[N/50 mm] feucht | 50 | 90 | 300 | 350 | k.A. | 30 | 90 | 140 | 85 | 90 |

| | | | | | | | | | | |
|---|---|---|---|---|---|---|---|---|---|---|
| ^{a} Katalysator für Radikalbildung (tertiäres Amin auf Toluidinbasis); ^{b} Core-shell Polymer mit einem Kern aus Polybutyl-Acrylat und einer Hülle aus Methacrylat k.A. = keine Adhäsion | | | | | | | | | | |

## Patentansprüche

1. Verwendung einer Zusammensetzung umfassend
a) 20 - 90 Gew.-% Methylmethacrylat **MMA**, insbesondere 50 - 80 Gew.-% , bevorzugt 55 - 70 Gew.-%, bezogen auf das Gesamtgewicht der Zusammensetzung, sowie
b1) 1 - 40 Gew.-%, insbesondere 7.5 - 35 Gew.-% , bevorzugt 10 - 20 Gew.-%, bezogen auf das Gesamtgewicht der Zusammensetzung, mindestens eines Elastomers und/oder
b2) 1 - 20 Gew.-%, insbesondere 2 - 10 Gew.-%, bevorzugt 2 - 5 Gew.-%, bezogen auf das Gesamtgewicht der Zusammensetzung, mindestens eines Core-shell Polymers, sowie
c) mindestens einen Radikalbildner, insbesondere ein Peroxid, ein Hydroperoxid oder ein Perester, meist bevorzugt Dibenzoylperoxid,
als Klebstoff, Dichtstoff oder als Beschichtung für das Verkleben oder Abdichten oder Beschichten von Substraten enthaltend weichmacherhaltigem PVC, wobei der Anteil an Weichmacher 20 Gew.-% - 40 Gew.-%, insbesondere 25 Gew.-% - 35 Gew.-%, beträgt, bezogen auf das Gesamtgewicht des weichmacherhaltigen PVC.

2. Verwendung gemäss Anspruch 1, **dadurch gekennzeichnet, dass** das Elastomer radikalisch polymerisierbare Gruppen, insbesondere Endgruppen, aufweist.

3. Verwendung gemäss einem der vorhergehenden Ansprüche, **dadurch gekennzeichnet, dass** es sich bei dem Elastomer um Polyrutethan-Polymere oder Blockcopolymere, insbesondere der Monomere Styrol, Butadien, Isopren, Chloropren, Acrylnitril und Methylmethacrylat, sowie chlorsulfoniertes Polyethylen, handelt.

4. Verwendung gemäss einem der vorhergehenden Ansprüche, **dadurch gekennzeichnet, dass** es sich bei dem Elastomer, insbesondere um ein Polyurethan(meth)acrylat und/oder ein vinylterminiertes Acrylonitril/Butadien-Copolymer handelt.

5. Verwendung gemäss einem der vorhergehenden Ansprüche, **dadurch gekennzeichnet, dass** das Core-Shell Polymere aus einer starren Schale eines starren thermoplastischen Polymers besteht, welche auf einem Kern aus vernetztem elastischem Acrylat- oder Butadien-Polymer aufgepfropft ist.

6. Verwendung gemäss einem der vorhergehenden Ansprüche, **dadurch gekennzeichnet, dass** die Zusammensetzung b1) ein Elastomer sowie b2) ein Core-Shell Polymer, aufweist.

7. Verwendung gemäss Anspruch 6, **dadurch gekennzeichnet, dass** die Gesamtmenge an b1) und b2) zusammen 10 - 35 Gew.-%, insbesondere 12 - 35 Gew.-%, bezogen auf die gesamte Zusammensetzung, beträgt.

8. Verwendung gemäss einem der vorhergehenden Ansprüche, **dadurch gekennzeichnet, dass** die Zusammensetzung zusätzlich mindestens ein tertiäres Amin oder ein Übergangsmetallsalz oder ein Übergangsmetallkomplex als Katalysator für die Radikalbildung enthält.

9. Verwendung gemäss einem der vorhergehenden Ansprüche, **dadurch gekennzeichnet, dass** das Substrat zu mehr als 50 Gew-%, vorzugsweise zu mehr als 70 Gew.-%, insbesondere zu mehr als 90 Gew-%, aus weichmacherhaltigem PVC, bezogen auf das Gesamtgewicht des Substrats, besteht.

10. Verwendung gemäss einem der vorhergehenden Ansprüche, **dadurch gekennzeichnet, dass** es sich bei den Substraten um feuchte Substrate und/oder häufig Feuchtigkeit exponierten Substraten handelt.

11. Verwendung gemäss einem der vorhergehenden Ansprüche, **dadurch gekennzeichnet, dass** es sich bei den Substraten um Abdichtungsmembranen, insbesondere Abdichtungsmembranen für den Hoch- und Tiefbau, handelt.

12. Zusammensetzung zum Verkleben, Abdichten oder Beschichten von weichmacherhaltigem PVC, wobei der Anteil an Weichmacher 20 Gew.-% - 40 Gew.-%, insbesondere 25 Gew.-% - 35 Gew.-%, beträgt, bezogen auf das Gesamtgewicht des weichmacherhaltigen PVC, umfassend:
a') 55 - 65 Gew.-% Methylmethacrylat **MMA**, bezogen auf das Gesamtgewicht der Zusammensetzung, sowie
b1') 10 - 20 Gew.-%, bezogen auf das Gesamtgewicht der Zusammensetzung, mindestens eines Elastomers und/oder
b2') 2 - 10 Gew.-%, bevorzugt 2 - 5 Gew.-%, bezogen auf das Gesamtgewicht der Zusammensetzung, mindestens ein Core-shell Polymer, sowie
c') mindestens einen Radikalbildner, insbesondere ein Peroxid, ein Hydroperoxid oder ein Perester, meist bevorzugt Dibenzoylperoxid,
wobei es sich bei dem Elastomer um ein Polyurethan(meth)acrylat und/oder ein vinylterminiertes Acrylonitril/Butadien-Copolymer und bei dem Core-shell Polymer um ein Acrylat-basiertes Core-shell Polymer oder ein MBS Polymer handelt.

13. Ausgehärtete Zusammensetzung, welche aus einer Zusammensetzung gemäss Anspruch 12 durch einen Härtungsprozess erhältlich ist.

14. Verfahren zum Verkleben zweier Substrate **S1** und **S2** umfassend die Schritte:
i) Applizieren einer Zusammensetzung, wie sie als Zusammensetzung in einem der Ansprüche 1 - 11 beschrieben ist, auf ein Substrat **S1**;
ii) Kontaktieren der applizierten Zusammensetzung mit einem zweiten Substrat **S2** innerhalb der Offenzeit;
oder
i') Applizieren einer Zusammensetzung, wie sie als Zusammensetzung in einem der Ansprüche 1 - 11 beschrieben ist, auf ein Substrat **S1**;
ii') Applizieren einer Zusammensetzung, wie sie als Zusammensetzung in einem der Ansprüche 1 - 11 beschrieben ist, auf ein Substrat **S2**;
iii') Fügen der beiden mit der Zusammensetzung versehenen Substrate **S1** und **S2** innerhalb der Offenzeit;
oder
i") Applizieren einer Zusammensetzun , wie sie als Zusammensetzung in einem der Ansprüche 1 - 11 beschrieben ist, zwischen zwei Substrate **S1** und **S2**;
wobei es sich bei dem Substrat **S1** um ein Substrat enthaltend weichmacherhaltiges PVC handelt, wobei der Anteil an Weichmacher 20 Gew.-% - 40 Gew.-%, insbesondere 25 Gew.-% - 35 Gew.-%, beträgt, bezogen auf das Gesamtgewicht des weichmacherhaltigen PVC.

## Claims

1. Use of a composition comprising
a) 20 - 90% by weight methyl methacrylate **MMA**, in particular 50 - 80% by weight, preferably 55 - 70% by weight, in relation to the total weight of the composition, and
b1) 1 - 40% by weight, in particular 7.5 - 35% by weight, preferably 10 - 20% by weight, in relation to the total weight of the composition, of at least one elastomer, and/or
b2) 1 - 20% by weight, in particular 2 - 10% by weight, preferably 2 - 5% by weight, in relation to the total weight of the composition, of at least one core-shell polymer, and
c) at least one radical former, in particular a peroxide, a hydroperoxide or a perester, most preferably dibenzoyl peroxide,
as adhesive, sealant or coating for the bonding or sealing or coating of substrates containing plasticized PVC, wherein the percentage of plasticizer is 20% by weight - 40% by weight, in particular 25% by weight - 35% by weight, in relation to the total weight of the plasticized PVC.

2. Use as recited in claim 1, **characterized in that** the elastomer has free radically polymerizable groups, in particular terminal groups.

3. Use as recited in one of the preceding claims, **characterized in that** the elastomer is a polyurethane or block copolymer, in particular of the monomers styrene, butadiene, isoprene, chloroprene, acrylonitrile and methyl methacrylate, as well as chlorosulfonated polyethylene.

4. Use as recited in one of the preceding claims, **characterized in that** the elastomer is in particular a polyurethane (meth)acrylate and/or a vinyl-terminated acrylonitrile/butadiene copolymer.

5. Use as recited in one of the preceding claims, **characterized in that** the core-shell polymer consists of a rigid shell of a rigid thermoplastic polymer which is grafted onto a core of cross-linked elastic acrylate or butadiene polymer.

6. Use as recited in one of the preceding claims, **characterized in that** composition b1) has an elastomer and b2) a core-shell polymer.

7. Use as recited in claim 6, **characterized in that** the total quantity of b1) and b2) together equals 10 - 35% by weight, in particular 12 - 35% by weight, in relation to the total composition.

8. Use as recited in one of the preceding claims, **characterized in that** the composition also contains at least one tertiary amine or a transition metal salt or a transition metal complex as a catalyst for the radical formation.

9. Use as recited in one of the preceding claims, **characterized in that** the substrate consists of more than 50% by weight, preferably more than 70% by weight, in particular more than 90% by weight of plasticized PVC, in relation to the total weight of the substrate.

10. Use as recited in one of the preceding claims, **characterized in that** the substrates are damp or moist substrates and/or substrates that are frequently exposed to moisture.

11. Use as recited in one of the preceding claims, **characterized in that** the substrates are waterproofing membranes, in particular waterproofing membranes for above-ground and underground building construction and civil engineering works.

12. Composition for bonding, sealing or coating of plasticized PVC, wherein the percentage of plasticizer is 20% by weight to 40% by weight, in particular 25% by weight to 35 % by weight, in relation to the total weight of the plasticized PVC, comprising:
a') 55 - 65% by weight of methyl methacrylate **MMA** in relation to the total weight of the composition, and
b1') 10 - 20% by weight, in relation to the total weight of the composition, of at least one elastomer, and/or
b2') 2 - 10% by weight, preferably 2 - 5% by weight, in relation to the total weight of the composition, of at least one core-shell polymer, and
c') at least one radical former, in particular a peroxide, a hydroperoxide or a perester, most preferably dibenzoyl peroxide,
wherein the elastomer is a polyurethane (meth)acrylate and/or a vinyl-terminated acrylonitrile/butadiene copolymer, and the core-shell polymer is an acrylate-based core-shell polymer or an MBS polymer.

13. Cured composition that can be obtained by a curing process from a composition as recited in claim 12.

14. Method for the bonding of two substrates **S1** and **S2** comprising the steps:
i) Application of a composition as described in one of the claims 1 - 11 to a substrate **S1**;
ii) Bonding of the composition applied with a second substrate **S2** within the open time;
or
i') Application of a composition as described in one of the claims 1 - 11 to a substrate **S1**;
ii') Application of a composition as described in one of the claims 1 - 11, to a substrate **S2**;
iii') Joining of the two substrates **S1** and **S2**, each provided with the composition, within the open time;
or
i") Application of a composition as described in one of the claims 1 - 11, between two substrates **S1** and **S2**;
wherein the substrate **S1** is a substrate containing plasticized PVC, wherein the percentage of plasticizer is 20% by weight - 40% by weight, in particular 25% by weight - 35% by weight, in relation to the total weight of the plasticized PVC.

## Revendications

1. Utilisation d'une composition comprenant
a) 20-90% en poids de méthacrylate de méthyle MMA, en particulier 50-80% en poids, de préférence 55-70% en poids, par rapport au poids total de la composition, ainsi que
b1) 1-40% en poids, en particulier 7,5-35% en poids, de préférence 10-20% en poids, par rapport au poids total de la composition, d'au moins un élastomère et/ou
b2) 1-20% en poids, en particulier 2-10% en poids, de préférence 2-5% en poids, par rapport au poids total de la composition, d'au moins un polymère à noyau-coquille ainsi que
c) au moins un agent de formation de radicaux, en particulier un peroxyde, un hydroperoxyde ou un perester, le plus préférablement le peroxyde de dibenzoyle,
comme adhésif, comme matériau d'étanchéité ou comme revêtement pour le collage ou le bouchage ou le revêtement de substrats contenant du PVC contenant un plastifiant, la proportion de plastifiant étant de 20-40% en poids, en particulier de 25-35% en poids, par rapport au poids total du PVC contenant un plastifiant.

2. Utilisation selon la revendication 1, **caractérisée en ce que** l'élastomère présente des groupes, en particulier des groupes terminaux, polymérisables par voie radicalaire.

3. Utilisation selon l'une quelconque des revendications précédentes, **caractérisée en ce qu'**il s'agit, pour l'élastomère, de polymères de polyuréthane ou de copolymères séquencés, en particulier des monomères styrène, butadiène, isoprène, chloroprène, acrylonitrile et méthacrylate de méthyle, ainsi que de polyéthylène chlorosulfoné.

4. Utilisation selon l'une quelconque des revendications précédentes, **caractérisée en ce qu'**il s'agit, pour l'élastomère, en particulier d'un (méth)acrylate de polyuréthane et/ou d'un copolymère d'acrylonitrile/butadiène terminé par vinyle.

5. Utilisation selon l'une quelconque des revendications précédentes, **caractérisée en ce que** le polymère à noyau-coquille est constitué par une coquille rigide d'un polymère thermoplastique rigide, qui est greffé sur un noyau en polymère d'acrylate ou de butadiène élastique réticulé.

6. Utilisation selon l'une quelconque des revendications précédentes, **caractérisée en ce que** la composition b1) présente un élastomère et la composition b2) présente un polymère à noyau-coquille.

7. Utilisation selon la revendication 6, **caractérisée en ce que** la quantité totale de b1) et b2) représente, ensemble, 10-35% en poids, en particulier 12-35% en poids, par rapport à la composition totale.

8. Utilisation selon l'une quelconque des revendications précédentes, **caractérisée en ce que** la composition contient en outre au moins une amine tertiaire ou un sel de métal de transition ou un complexe de métal de transition comme catalyseur pour la formation de radicaux.

9. Utilisation selon l'une quelconque des revendications précédentes, **caractérisée en ce que** le substrat est constitué à raison de plus de 50% en poids, de préférence à raison de plus de 70% en poids, en particulier à raison de plus de 90% en poids, de PVC contenant un plastifiant, par rapport au poids total du substrat.

10. Utilisation selon l'une quelconque des revendications précédentes, **caractérisée en ce qu'**il s'agit, pour les substrats, de substrats humides et/ou de substrats fréquemment exposés à l'humidité.

11. Utilisation selon l'une quelconque des revendications précédentes, **caractérisée en ce qu'**il s'agit, pour les substrats, de membranes d'étanchéité, en particulier de membranes d'étanchéité pour la construction en hauteur et la construction souterraine.

12. Composition pour le collage, le bouchage ou le revêtement de PVC contenant un plastifiant, la proportion de plastifiant étant de 20-40% en poids, en particulier de 25-35% en poids, par rapport au poids total du PVC contenant un plastifiant, comprenant :
a') 55-65% en poids de méthacrylate de méthyle MMA, par rapport au poids total de la composition, ainsi que
b1') 10-20% en poids, par rapport au poids total de la composition, d'au moins un élastomère et/ou
b2') 2-10% en poids, en particulier 2-5% en poids, par rapport au poids total de la composition, d'au moins un polymère à noyau-coquille ainsi que
c') au moins un agent de formation de radicaux, en particulier un peroxyde, un hydroperoxyde ou un perester, le plus préférablement le peroxyde de dibenzoyle, en ce qu'il s'agit, pour l'élastomère, en particulier d'un (méth)acrylate de polyuréthane et/ou d'un copolymère d'acrylonitrile/butadiène terminé par vinyle et, pour le polymère à noyau-coquille, d'un polymère à noyau-coquille à base d'acrylate ou d'un polymère de type MBS.

13. Composition durcie, qui peut être obtenue à partir d'une composition selon la revendication 12 par un procédé de durcissement.

14. Procédé pour le collage de deux substrats S1 et S2 comprenant les étapes consistant à :
i) appliquer une composition, telle qu'elle est décrite comme composition dans l'une quelconque des revendications 1-11, sur un substrat S1 ;
ii) mettre en contact la composition appliquée avec un deuxième substrat S2 pendant le temps ouvert ; ou
i') appliquer une composition, telle qu'elle est décrite comme composition dans l'une quelconque des revendications 1-11, sur un substrat S1 ;
ii') appliquer une composition, telle qu'elle est décrite comme composition dans l'une quelconque des revendications 1-11, sur un substrat S2 ;
iii') assembler les deux substrats S1 et S2 pourvus de la composition pendant le temps ouvert ; ou
i") appliquer une composition, telle qu'elle est décrite comme composition dans l'une quelconque des revendications 1-11, entre deux substrats S1 et S2 ;
le substrat S1 étant un substrat contenant du PVC contenant un plastifiant, la proportion de plastifiant étant de 20-40% en poids, en particulier de 25-35% en poids, par rapport au poids total du PVC contenant un plastifiant.
